# EUROPÄISCHE PATENTSCHRIFT

(11) **EP 3 484 627 B1**
(45) Veröffentlichungstag und Bekanntmachung des Hinweises auf die Patenterteilung: **03.06.2020**
(21) Anmeldenummer: 17735107.9
(22) Anmeldetag: 03.07.2017
(51) Int. Cl.: B05B 7/04, B05B 12/14, B05C 11/10, B05C 5/02, F16K 11/074, F16K 3/08, B01F 5/00, B01F 15/04, B05B 1/34, B05B 7/12, B05B 1/30

(54) **MISCHVENTIL**
MIXING VALVE
VALVE MÉLANGEUSE

(30) Priorität: 15.07.2016 DE 102016008644
(43) Veröffentlichungstag der Anmeldung: 22.05.2019
(73) Patentinhaber: Dürr Systems AG, 74321 Bietigheim-Bissingen (DE)
(72) Erfinder: SCHNUR, Frank, 74357 Bönnigheim (DE)
(74) Vertreter: v. Bezold & Partner Patentanwälte - PartG mbB
(86) Internationale Anmeldenummer: PCT/EP2017/066498
(87) Internationale Veröffentlichungsnummer: WO 2018/010994

(56) Entgegenhaltungen:
- WO-A1-2016/176090
- DE-B3-102010 046 056
- DE-U1-202011 102 452
- FR-A1- 2 984 287
- US-A- 3 472 423
- US-A1- 2007 051 749

## Beschreibung

Die Erfindung betrifft ein Mischventil zum Mischen von zwei Beschichtungsmittelkomponenten zu einem Mehrkomponentengemisch, insbesondere zum Mischen von Klebstoffkomponenten eines Mehrkomponentenklebstoffs oder zum Mischen von Komponenten eines Abdichtmaterials.

In modernen Lackieranlagen zur Lackierung von Kraftfahrzeugkarosseriebauteilen werden oftmals Beschichtungsmittel eingesetzt, die aus mehreren Komponenten zusammengemischt werden. Ein Beispiel für derartige Mehrkomponentengemische sind Klebstoffe oder Dickstoffe, die beispielsweise zur Schalldämmung oder Versiegelung eingesetzt werden. Ein anderes Beispiel dafür sind sogenannte 2K-Lacke, die aus Stammlack und Härter bestehen.

Bei derartigen Mehrkomponentensystemen werden die verschiedenen Beschichtungsmittel über Beschichtungsmittelventile zusammengeführt und dann gemischt. Hierbei treten im Stand der Technik verschiedene Probleme auf, die nachfolgend kurz beschrieben werden.

Ein Nachteil der bekannten Ventilanordnungen zum Mischen verschiedener Beschichtungsmittelkomponenten (z.B. Stammlack und Härter) besteht in den relativ großen Toträumen in den Mischräumen, was bei einem Stillstand der Anlage zu erheblichen Spülverlusten führt.

Darüber hinaus besteht bei den bekannten Ventilanordnungen die Gefahr des Eintrocknens, was bei einer Aushärtung im schlimmsten Fall zu einem völligen Funktionsverlust führen kann.

Weiterhin sind die Düsen und die Zuführeinheiten hierbei schwer zu reinigen.

Darüber hinaus kann das Mischungsverhältnis der verschiedenen Beschichtungsmittelkomponenten in der Regel nur durch einen Austausch des jeweiligen Mischkopfs verändert werden, so dass bei einer Änderung des Mischungsverhältnisses auch ein Umbau der Anlage erforderlich ist.

Schließlich sind bei den bekannten Ventilanordnungen auch zusätzliche Absperrventile erforderlich.

Zum technischen Hintergrund der Erfindung ist auch hinzuweisen auf US 2007/051749 A1, US 3 472 423 A, DE 10 2010 046056 B3, DE 20 2011 102452 U1 und WO 2016/176090 A1. Schließlich offenbart FR 2 984 287 A1 ein Mischventil gemäß dem Oberbegriff von Anspruch 1. Dieses bekannte Mischventil ist jedoch hinsichtlich des Antriebs und der räumlichen Anordnung noch nicht optimal.

Der Erfindung liegt deshalb die Aufgabe zugrunde, eine entsprechend verbesserte Ventilanordnung zu schaffen.

Diese Aufgabe wird durch ein erfindungsgemäßes Mischventil gemäß dem Hauptanspruch gelöst.

Das erfindungsgemäße Mischventil eignet sich zum Mischen von mehreren Beschichtungsmittelkomponenten zu einem Mehrkomponentengemisch. Beispielsweise kann das erfindungsgemäße Mischventil eingesetzt werden, um Stammlack und Härter eines Zweikomponentenlackes (2K-Lack) zu mischen. Das erfindungsgemäße Mischventil kann jedoch auch zum Mischen anderer Beschichtungsmittelkomponenten ausgelegt werden, beispielsweise zum Mischen von Komponenten eines Klebstoffs oder eines Dickstoffs.

Das erfindungsgemäße Mischventil weist in Übereinstimmung mit dem Stand der Technik zwei Beschichtungsmitteleinlässe auf, um die verschiedenen Beschichtungsmittelkomponenten (z.B. Härter und Stammlack) zuzuführen.

Darüber hinaus weist das erfindungsgemäße Mischventil in Übereinstimmung mit dem Stand der Technik zwei Beschichtungsmittelventile auf, um den Beschichtungsmittelstrom durch die beiden Beschichtungsmitteleinlässe zu steuern.

Ferner weist auch das erfindungsgemäße Mischventil in Übereinstimmung mit dem Stand der Technik einen Beschichtungsmittelauslass auf, um das Mehrkomponentengemisch in einer bestimmten Ausströmrichtung abzugeben.

Außerdem und auch in Übereinstimmung mit dem Stand der Technik ist zumindest eines dieser Beschichtungsmittelventile als Drehschieberventil ausgebildet und weist zwei planparallele Ventilscheiben auf, die relativ zueinander um eine Drehachse drehbar sind, um den jeweiligen Beschichtungsmittelstrom in Abhängigkeit von der Winkelstellung der Ventilscheiben relativ zueinander zu steuern.

Ein Vorteil des erfindungsgemäßen Mischventils besteht in dem sogenannten Nullabschluss der jeweiligen Beschichtungsmittelkomponente durch eine Drehbewegung (Abscherung) der Ventilscheiben relativ zueinander.

Ein weiterer Vorteil des erfindungsgemäßen Mischventils besteht in der sehr feinen Justiermöglichkeit auch bei sehr kleinen Beschichtungsmittelströmen, wie später noch eingehend erläutert wird.

Überhaupt ist zu erwähnen, dass das erfindungsgemäße Mischventil eine dynamische, variable Einstellung des Mischungsverhältnisses der verschiedenen Beschichtungsmittelkomponenten ermöglicht.

Ein weiterer Vorteil des erfindungsgemäßen Mischventils besteht in der einfachen Wartung.

Ferner ermöglicht die Erfindung auch einen einfachen Düsenwechsel, was unter Umständen sogar ohne Werkzeug möglich ist und nachfolgend noch detailliert beschrieben ist.

Gemäß der Erfindung verläuft die Drehachse der Ventilscheiben quer, insbesondere rechtwinklig, zur Ausströmrichtung an dem Beschichtungsmittelauslass. Die Ventilscheiben sind hierbei also mit ihrer Scheibenebene parallel zur Ausströmrichtung ausgerichtet.

Hierbei können die Drehachsen der drehbaren Ventilscheiben koaxial verlaufen.

In dem bevorzugten Ausführungsbeispiel ist beiderseits einer mittigen, ortsfesten Ventilscheibe jeweils eine drehbare Ventilscheibe angeordnet. Hierbei sind die Beschichtungsmitteleinlässe vorzugsweise auf gegenüberliegenden Seiten der Ventilscheiben angeordnet. Dies bedeutet, dass beispielsweise die eine Beschichtungsmittelkomponente von links zugeführt wird, während die andere Beschichtungsmittelkomponente von rechts zugeführt wird.

Die beiden Beschichtungsmittelkomponenten können innerhalb der ortsfesten Ventilscheibe zusammengeführt werden.

Die ortsfeste mittige Ventilscheibe ist hierbei also Bestandteil der beiden Beschichtungsmittelventile.

In dem bevorzugten Ausführungsbeispiel der Erfindung ist jeweils die stromabwärts gelegene Ventilscheibe ortsfest montiert, während die stromaufwärts gelegene Ventilscheibe drehbar ist.

Es ist jedoch alternativ auch möglich, dass die stromabwärts gelegene Ventilscheibe drehbar ist, während die stromaufwärts gelegene Ventilscheibe ortsfest ist.

In der stromaufwärts gelegenen Ventilscheibe und auch in der stromabwärts gelegenen Ventilscheibe befindet sich jeweils mindestens eine Durchgangsbohrung, wobei die Durchgangsbohrungen in den beiden Ventilscheiben durch eine relative Drehbewegung mehr oder weniger in Deckung gebracht werden können und dann einen freien Ventilquerschnitt bilden, der von dem Drehwinkel der beiden Ventilscheiben relativ zueinander abhängig ist.

Hierbei ist zu erwähnen, dass das erfindungsgemäße Mischventil eine bestimmte Ventilkennlinie aufweist, wobei die Ventilkennlinie den Zusammenhang zwischen dem Drehwinkel einerseits und dem freien Ventilquerschnitt andererseits wiedergibt. Durch eine geeignete Formgebung der Durchgangsbohrungen in den beiden aufeinanderliegenden Ventilscheiben lässt sich bei dem erfindungsgemäßen Mischventil eine nicht-lineare Ventilkennlinie realisieren.

In dem bevorzugten Ausführungsbeispiel ist diese Ventilkennlinie progressiv. Dies bedeutet, dass sich der freie Ventilquerschnitt zu Beginn nur relativ wenig in Abhängigkeit von dem Drehwinkel ändert, was dann eine sehr feine Dosierung bei kleinen Beschichtungsmittelströmen erlaubt. Mit zunehmendem Drehwinkel und damit auch zunehmendem Beschichtungsmittelstrom wird die Ventilkennlinie dann jedoch steiler, damit innerhalb des zur Verfügung stehenden Drehwinkels auch ein maximaler freier Ventilquerschnitt realisiert werden kann.

Die Nichtlinearität der Ventilkennlinie kann - wie bereits kurz erwähnt - durch eine geeignete Formgebung der Durchgangsbohrungen in den Ventilscheiben realisiert werden. Beispielsweise kann sich die Durchgangsbohrung in einer der Ventilscheiben in Umfangsrichtung verengen, beispielsweise tropfenförmig, um die gewünschte nicht-lineare Abhängigkeit des freien Ventilquerschnitts von dem Drehwinkel zu erreichen.

Darüber hinaus kann sich die Durchgangsbohrung in der stromabwärts gelegenen Ventilscheibe auch in Strömungsrichtung verengen, insbesondere konisch.

Ferner besteht auch die Möglichkeit, dass die Durchgangsbohrung in der stromabwärts gelegenen Ventilscheibe in Umfangsrichtung angewinkelt ist, so dass das erste bzw. zweite Beschichtungsmittel mit einem Drall in Umfangsrichtung aus der Durchgangsbohrung austritt.

Im Rahmen der Erfindung besteht auch die Möglichkeit, dass das Mischventil eine integrierte Austrittsdüse aufweist, die von dem Beschichtungsmittelauslass mit dem Mehrkomponentengemisch gespeist wird.

Vorzugsweise besteht diese Austrittsdüse aus Kunststoff, beispielsweise aus Kunststoff-Spritzguss, was eine einfache und kostengünstige Herstellung erlaubt.

Die Austrittsdüse weist einen Strömungskanal auf, der so geformt sein kann, dass er dem durchströmenden Mehrkomponentengemisch einen Drall verleiht. Das Mehrkomponentengemisch strömt dann mit einem entsprechenden Drall aus der Austrittsdüse aus.

Ferner ist zu erwähnen, dass die Austrittsdüse vorzugsweise auswechselbar an dem Mischventil angebracht ist. Die Austrittsdüse kann also als Austauschteil hergestellt werden.

Vorzugsweise ermöglicht das erfindungsgemäße Mischventil einen werkzeuglosen Wechsel der Austrittsdüse, beispielsweise mittels eines Bajonettverschlusses oder mittels einer manuell bedienbaren Überwurfmutter.

Weiterhin ist zu erwähnen, dass das Mischventil auch einen Spülmitteleinlass aufweisen kann, um Spülmittel zuzuführen. In diesem Fall befindet sich in der Ventilscheibe vorzugsweise eine separate Durchgangsbohrung für das Spülmittel. In Abhängigkeit von dem Drehwinkel der Ventilscheibe kann dann wahlweise Beschichtungsmittel oder Spülmittel durchgelassen werden.

Darüber hinaus ist zu erwähnen, dass die Einstellung der Beschichtungsmittelventile vorzugsweise durch einen Elektromotor erfolgt, der die Ventilscheiben relativ zueinander dreht. Hierbei können auch zwei Elektromotoren eingesetzt werden, die es ermöglichen, die Ventilscheiben der Beschichtungsmittelventile unabhängig voneinander zu drehen, was eine Einstellung des Mischungsverhältnisses durch eine geeignete Ansteuerung der Elektromotoren ermöglicht.

Schließlich ist noch zu erwähnen, dass die Erfindung nicht nur Schutz beansprucht für das vorstehend beschriebene erfindungsgemäße Mischventil. Vielmehr beansprucht die Erfindung auch Schutz für einen kompletten Beschichtungsroboter mit einem solchen Mischventil bzw. für eine komplette Lackier- bzw. Beschichtungsanlage mit mindestens einem solchen Mischventil.

Andere vorteilhafte Weiterbildung der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine schematische Längsschnittansicht durch ein nicht erfindungsgemäßes Mischventil,
- Figur 1B: eine Querschnittsansicht durch das Mischventil gemäß Figur 1A im Bereich der Ventilscheiben,
- Figur 2A: eine erfindungsgemäße Abwandlung des Mischventils gemäß den Figuren 1A und 1B mit einer anderen Ausrichtung der Ventilscheiben, sowie
- Figur 3: ein Beispiel einer möglichen Ventilkennlinie.

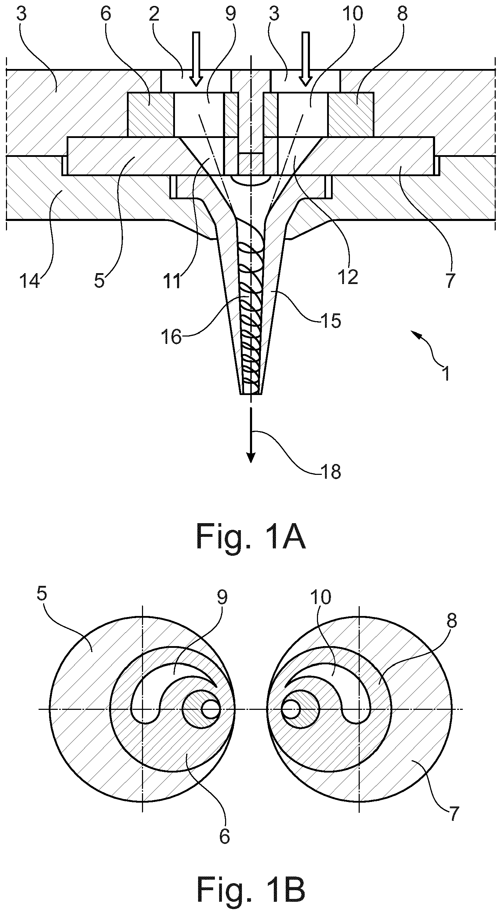

Die Figuren 1A und 1B zeigen verschiedene Ansichten einer Variante eines nicht erfindungsgemäßen Mischventils 1, das beispielsweise in einer Lackieranlage zur Lackierung von Kraftfahrzeugkarosseriebauteilen eingesetzt werden kann, um verschiedene Beschichtungsmittelkomponenten eines Dickstoffs zu mischen.

Hierzu weist das Mischventil 1 zwei Beschichtungsmitteleinlässe 2, 3 auf, über die die beiden Beschichtungsmittelkomponenten getrennt voneinander zugeführt werden.

Darüber hinaus weist das Mischventil 1 einen Beschichtungsmittelauslass 4 auf, wobei über den Beschichtungsmittelauslass 4 das aus den beiden Beschichtungsmitteln bestehende Mehrkomponentengemisch ausgegeben wird.

Zwischen den beiden Beschichtungsmitteleinlässen 2, 3 einerseits und dem Beschichtungsmittelauslass 4 andererseits befinden sich zwei Beschichtungsmittelventile, die den Beschichtungsmittelstrom durch den Beschichtungsmitteleinlass 2 bzw. 3 steuern.

Das Beschichtungsmittelventil zwischen dem Beschichtungsmitteleinlass 2 und dem Beschichtungsmittelauslass 4 weist eine ortsfeste Ventilscheibe 5 und eine drehbare Ventilscheibe 6 auf.

Das andere Beschichtungsmittelventil zwischen dem Beschichtungsmitteleinlass 3 und dem Beschichtungsmittelauslass 4 weist ebenfalls eine ortsfeste Ventilscheibe 7 und eine drehbare Ventilscheibe 8 auf.

In den Ventilscheiben 5-8 befinden sich jeweils Durchgangsbohrungen 9, 10, 11, 12.

Die Durchgangsbohrungen 9, 11 können durch eine relative Drehbewegung der beiden Ventilscheiben 5, 6 relativ zueinander mehr oder weniger in Deckung gebracht werden, so dass der frei durchströmbare Ventilquerschnitt von dem Drehwinkel der Ventilscheibe 6 relativ zu der Ventilscheibe 5 abhängt.

Das Gleiche gilt für die Durchgangsbohrungen 10, 12 in den beiden Ventilscheiben 7, 8, die ebenfalls relativ zueinander gedreht werden können.

Hierbei ist zu erwähnen, dass der Drehwinkel der Ventilscheiben 5, 6 relativ zueinander unabhängig von dem Drehwinkel der Ventilscheiben 7, 8 relativ zueinander eingestellt werden kann. Dadurch ist es möglich, das Mischungsverhältnis der zu applizierenden Beschichtungsmittelkomponenten durch eine geeignete Drehung der Ventilscheiben 6, 8 sehr genau und variabel einzustellen.

Darüber hinaus kann auch der Beschichtungsmittelstrom des Mehrkomponentengemischs eingestellt werden, der über den Beschichtungsmittelauslass 4 abgegeben wird.

Das erfindungsgemäße Mischventil 1 ermöglicht also zum einen eine Einstellung des Mischungsverhältnisses und zum anderen eine Einstellung der Abgabemenge.

Weiterhin ist zu erwähnen, dass die Ventilscheiben 5-8 in zwei Gehäuseteilen 13, 14 untergebracht sind, was hier nur schematisch dargestellt ist.

Darüber hinaus ist zu erwähnen, dass der Antrieb der drehbaren Ventilscheiben 6, 8 in der Zeichnung nicht dargestellt ist.

Ferner ist zu erwähnen, dass das Mischventil 1 eine Austrittsdüse 15 aufweist, die von dem Beschichtungsmittelauslass 4 mit dem Mehrkomponentengemisch gespeist wird.

Das Mehrkomponentengemisch durchströmt hierbei einen Düsenkanal 16 in der Austrittsdüse 15. Der Düsenkanal 16 ist hierbei so geformt, dass das durchströmende Mehrkomponentengemisch einen Drall erhält, wie in der Zeichnung durch die Spirallinie in dem Düsenkanal 16 angedeutet wird.

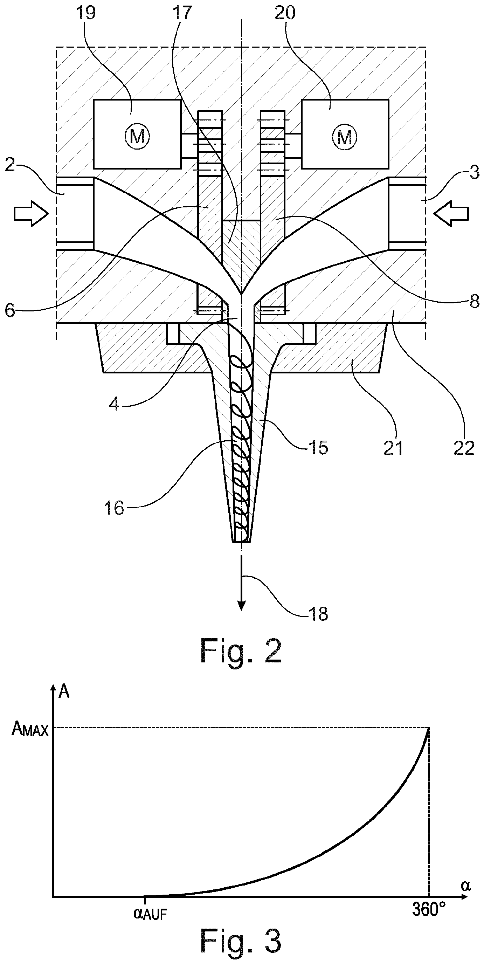

Weiterhin ist zu erwähnen, dass die Durchgangsbohrungen 9, 10 in Umfangsrichtung tropfenförmig sind, wie aus Figur 1B ersichtlich ist. Dies führt vorteilhaft zu einer nichtlinearen, progressiven Ventilkennlinie, wie aus Figur 3 ersichtlich ist. So ist aus der Zeichnung ersichtlich, dass der freie Öffnungsquerschnitt A des Mischventils 1 bei einem kleinen Drehwinkel α zunächst nur eine geringe Steigung in Abhängigkeit von dem Drehwinkel α hat, was eine sehr feine Dosierung ermöglicht. Mit zunehmendem Drehwinkel α wird die Steigung der Ventilkennlinie dann steiler, damit innerhalb des zur Verfügung stehenden Drehwinkels auch ein maximaler freier Ventilquerschnitt Aₘₐₓ erreicht werden kann.

Figur 2 zeigt eine Abwandlung der Variante gemäß Figuren 1A und 1B, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die drehbaren Ventilscheiben 6, 8 beiderseits einer mittigen, ortsfesten Ventilscheibe 17 angeordnet sind. Die ortsfeste Ventilscheibe 17 ist hierbei also Bestandteil beider Beschichtungsmittelventile.

Eine weitere Besonderheit dieses Ausführungsbeispiels besteht darin, dass die beiden drehbaren Ventilscheiben 6, 8 um Drehachsen drehbar sind, die koaxial verlaufen und rechtwinklig zur Ausströmrichtung 18 verlaufen.

Darüber hinaus sind hier zwei Elektromotoren 19, 20 dargestellt, die dazu dienen, die beiden drehbaren Ventilscheiben 6, 8 relativ zu der mittigen, ortsfesten Ventilscheibe 17 zu drehen.

In diesem Ausführungsbeispiel werden die verschiedenen Beschichtungsmittelkomponenten innerhalb der mittigen, ortsfesten Ventilscheibe 17 zusammengeführt.

Weiterhin ist zu erwähnen, dass die Austrittsdüse 15 hierbei mittels einer Überwurfmutter 21 an einem Gehäuse 22 des Mischventils 1 befestigt ist.

Aus der Beschreibung des Ausführungsbeispiels ist auch ersichtlich, dass die Ventilscheiben 5-8 nicht exakt plattenförmig sein müssen. Es reicht vielmehr auf, wenn die Ventilscheiben 5-8 auf ihren einander zugewandten Seitenfläche planparallel verlaufen, um eine Drehbewegung relativ zueinander zu ermöglichen.

Die Erfindung ist nicht auf das vorstehend beschriebene bevorzugte Ausführungsbeispiel beschränkt. Vielmehr ist eine Vielzahl von Varianten und Abwandlungen möglich, die unter die angehängten Ansprüche fallen.

### Bezugszeichenliste:

- 1: Mischventil
- 2: Beschichtungsmitteleinlass
- 3: Beschichtungsmitteleinlass
- 4: Beschichtungsmittelauslass
- 5: Ortsfeste Ventilscheiben
- 6: Drehbare Ventilscheiben
- 7: Ortsfeste Ventilscheiben
- 8: Drehbare Ventilscheiben
- 9-12: Durchgangsbohrungen
- 13: Oberes Gehäuseteil
- 14: Unteres Gehäuseteil
- 15: Austrittsdüse
- 16: Düsenkanal der Austrittsdüse
- 17: Mittlere ortsfeste Düsenscheibe
- 18: Ausströmrichtung
- 19: Elektromotor zum Drehen der drehbaren Ventilscheibe 6
- 20: Elektromotor zum Drehen der drehbaren Ventilscheibe 8
- 21: Überwurfmutter zur Sicherung der Austrittsdüse
- 22: Gehäuse
- A: Freier Ventilquerschnitt
- A_{MAX}: maximaler freier ventilquerschnitt
- α: Drehwinkel der ventilescheiben 6 bzw. 8
- α_{AUF}: Öffnungswinkel, ab dem das jeweilige Beschichtungsmittelventil öffnet

## Patentansprüche

1. Mischventil (1) zum Mischen einer ersten Beschichtungsmittelkomponente mit einer zweiten Beschichtungsmittelkomponente eines Beschichtungsmittels zu einem Mehrkomponentengemisch, insbesondere zum Mischen von Komponenten von Dichtstoffen oder Klebstoffen, mit
a) einem ersten Beschichtungsmitteleinlass (2) zur Zuführung der ersten Beschichtungsmittelkomponente,
b) einem ersten Beschichtungsmittelventil (6, 17) zur Steuerung eines ersten Beschichtungsmittelstroms der ersten Beschichtungsmittelkomponente durch den ersten Beschichtungsmitteleinlass (2),
c) einem zweiten Beschichtungsmitteleinlass (3) zur Zuführung der zweiten Beschichtungsmittelkomponente,
d) einem zweiten Beschichtungsmittelventil (8, 17) zur Steuerung eines zweiten Beschichtungsmittelstroms der zweiten Beschichtungsmittelkomponente durch den zweiten Beschichtungsmitteleinlass (3), und
e) einem Beschichtungsmittelauslass (4) zur Abgabe des Mehrkomponentengemischs in einer bestimmten Ausströmrichtung (18),
f) wobei das erste Beschichtungsmittelventil (6, 17) und/oder das zweite Beschichtungsmittelventil (8, 17) als Drehschieberventil ausgebildet ist mit zwei planparallelen Ventilscheiben (6, 8, 17), die relativ zueinander um eine Drehachse drehbar sind,
**dadurch gekennzeichnet,**
g) **dass** die Drehachse der Ventilscheiben (6, 8) quer, insbesondere rechtwinklig, zur Ausströmrichtung (18) an dem Beschichtungsmittelauslass (4) ausgerichtet ist.

2. Mischventil (1) gemäß Anspruch 1,
**dadurch gekennzeichnet,**
a) **dass** die Drehachsen der drehbaren Ventilscheiben (6, 8) koaxial verlaufen, und/oder
b) **dass** beiderseits einer mittigen ortsfesten Ventilscheibe (17) jeweils eine drehbare Ventilscheibe (6, 8) angeordnet ist, und/oder
c) **dass** die Beschichtungsmitteleinlässe (2, 3) auf gegenüber liegenden Seiten der Ventilscheiben (6, 8, 17) angeordnet sind, und/oder
d) **dass** die beiden Beschichtungsmittelkomponenten innerhalb der ortsfesten Ventilscheibe (17) zusammengeführt werden.

3. Mischventil (1) nach einem der vorhergehenden Ansprüche, **dadurch gekennzeichnet,**
a) **dass** die stromabwärts gelegene Ventilscheibe (17) ortsfest montiert ist, und
b) **dass** die stromaufwärts gelegene Ventilscheibe (6, 8) drehbar sind.

4. Mischventil (1) nach einem der vorhergehenden Ansprüche, **dadurch gekennzeichnet,**
a) **dass** die stromaufwärts gelegene Ventilscheibe (6, 8) eine Durchgangsbohrung für das erste bzw. zweite Beschichtungsmittel aufweist, und
b) **dass** die stromabwärts gelegene Ventilscheibe (17) eine Durchgangsbohrung für das erste bzw. zweite Beschichtungsmittel aufweist.

5. Mischventil (1) nach Anspruch 4,
**dadurch gekennzeichnet,**
a) **dass** die Durchgangsbohrung in der stromaufwärts gelegenen Ventilscheibe (6, 8) mit der Durchgangsbohrung in der stromabwärts gelegenen Ventilscheibe (17) in Abhängigkeit von dem relativen Drehwinkel (α) der beiden Ventilscheiben (6, 8) mehr oder weniger in Deckung gebracht werden kann und einen freien Ventilquerschnitt (A) bildet, der von dem relativen Drehwinkel (α) der beiden Ventilscheiben (6, 8) abhängt, und/oder
b) **dass** der freie Ventilquerschnitt (A) nichtlinear von dem Drehwinkel (α) der beiden Ventilscheiben (6, 8) abhängt, und/oder
c) **dass** der freie Ventilquerschnitt (A) progressiv von dem Drehwinkel (α) abhängt, um trotz eines begrenzten maximalen Drehwinkels (α) eine feine Dosierung bei kleinen Beschichtungsmittelströmen zu kombinieren mit einem großen maximalen Beschichtungsmittelstrom.

6. Mischventil (1) nach Anspruch 5, **dadurch gekennzeichnet, dass** sich die Durchgangsbohrung in zumindest einer der Ventilscheiben (6, 8) in Umfangsrichtung verengt, insbesondere tropenförmig, um die nichtlineare Abhängigkeit des freien Ventilquerschnitts (A) von dem Drehwinkel (α) zu erreichen.

7. Mischventil (1) nach einem der Ansprüche 4 bis 6, **dadurch gekennzeichnet, dass** sich die Durchgangsbohrung in der stromabwärts gelegenen Ventilscheibe in Strömungsrichtung verengt, insbesondere konisch.

8. Mischventil (1) nach einem der Ansprüche 4 bis 7, **dadurch gekennzeichnet, dass** die Durchgangsbohrung in der stromabwärts gelegenen Ventilscheibe (17) in Umfangsrichtung angewinkelt ist, so dass das erste bzw. zweite Beschichtungsmittel mit einem Drall in Umfangsrichtung aus der Durchgangsbohrung austritt.

9. Mischventil (1) nach einem der vorhergehenden Ansprüche, **gekennzeichnet durch** eine Austrittsdüse (15), die von dem Beschichtungsmittelauslass (4) mit dem Mehrkomponentengemisch gespeist wird.

10. Mischventil (1) nach Anspruch 9 **dadurch gekennzeichnet,**
a) **dass** die Austrittsdüse (15) aus Kunststoff besteht, insbesondere aus Kunststoff-Spritzguss, und/oder
b) **dass** die Austrittsdüse (15) einen Strömungskanal (16) aufweist, der dem durchströmenden Mehrkomponentengemisch einen Drall verleiht, und/oder
c) **dass** die Austrittsdüse (15) auswechselbar ist, insbesondere werkzeuglos, insbesondere
c1) mittels eines Bajonettverschlusses oder
c2) mittels einer Überwurfmutter (21).

11. Mischventil (1) nach einem der vorhergehenden Ansprüche, **dadurch gekennzeichnet,**
a) **dass** das Mischventil (1) zur Zuführung eines Spülmittels einen Spülmitteleinlass aufweist, und/oder
b) **dass** mindestens eine der Ventilscheiben (6, 8) neben der Durchgangsbohrung für das erste bzw. zweite Beschichtungsmittel eine weitere Durchgangsbohrung für das Spülmittel aufweist.

12. Mischventil (1) nach einem der vorhergehenden Ansprüche, **gekennzeichnet durch**
a) einen Elektromotor (19, 20) zur Drehung der Ventilscheiben (6, 8) relativ zueinander, oder
b) zwei Elektromotoren (19, 20) zur Drehung der drehbaren Ventilscheibe (6) des ersten Beschichtungsmittelventils unabhängig von der drehbaren Ventilscheibe (8) des zweiten Beschichtungsmittelventils.

13. Mischventil (1) nach einem der vorhergehenden Ansprüche, **dadurch gekennzeichnet, dass** das Mischventil (1) die beiden Beschichtungsmittelkomponenten mit einem bestimmten Mischungsverhältnis mischt, wobei das Mischungsverhältnis durch eine entsprechende Drehung der Ventilscheiben (6, 8) einstellbar ist.

14. Beschichtungsroboter zur Applikation eines Mehrkomponentengemischs, insbesondere eine Mehrkomponentenlacks, mit einem Mischventil (1) nach einem der vorhergehenden Ansprüche.

## Claims

1. Mixing valve (1) for mixing a first coating agent component with a second coating agent component of a coating agent to form a multicomponent mixture, in particular for mixing components of sealants or adhesives, having
a) a first coating agent inlet (2) for supplying the first coating agent component,
b) a first coating agent valve (6, 17) for controlling a first coating agent flow of said first coating agent component through said first coating agent inlet (2),
c) a second coating agent inlet (3) for supplying the second coating agent component,
d) a second coating agent valve (8, 17) for controlling a second coating agent flow of said second coating agent component through said second coating agent inlet (3); and
e) a coating agent outlet (4) for discharging the multicomponent mixture in a specific outflow direction (18),
f) wherein the first coating agent valve (6, 17) and/or the second coating agent valve (8, 17) is designed as a rotary slide valve with two plane-parallel valve discs (6, 8, 17) which are rotatable relative to one another about an axis of rotation,
**characterised in that**
g) the axis of rotation of the valve discs (6, 8) is aligned transversely, in particular at right angles, to the outflow direction (18) at the coating agent outlet (4).

2. Mixing valve (1) according to claim 1,
**characterised in that**
a) the axes of rotation of the rotatable valve discs (6, 8) are coaxial, and/or
b) a rotatable valve disc (6, 8) is arranged on each side of a central fixed valve disc (17), and/or
c) the coating agent inlets (2, 3) are arranged on opposite sides of the valve discs (6, 8, 17), and/or
d) the two coating agent components are brought together within the stationary valve disc (17).

3. Mixing valve (1) according to one of the preceding claims, **characterized in that,**
a) the downstream valve disc (17) is fixed in place; and
b) that the upstream valve disc (6, 8) is rotatable.

4. Mixing valve (1) according to one of the preceding claims, **characterised in that,**
a) the upstream valve disc (6, 8) has a through-hole for the first and second coating means, respectively, and
b) **in that** the downstream valve disc (17) has a through-hole for the first and second coating means, respectively.

5. Mixing valve (1) according to claim 4,
**characterised in that**
a) the through-hole in the upstream valve disc (6, 8) can be brought more or less into line with the through-hole in the downstream valve disc (17) as a function of the relative angle of rotation (α) of the two valve discs (6; 8) and forms a free valve cross-section (A) which depends on the relative angle of rotation (α) of the two valve discs (6; 8) and depends on the relative angle of rotation (α) of the two valve discs (6; 8), and/or
b) that the free valve cross-section (A) depends nonlinearly on the angle of rotation (α) of the two valve discs (6; 8), and/or
c) **in that** the free valve cross-section (A) depends progressively on the angle of rotation (α) in order to combine a fine dosage with small coating medium flows with a large maximum coating medium flow despite a limited maximum angle of rotation (α).

6. Mixing valve (1) according to claim 5, **characterized in that** the through-hole in at least one of the valve discs (6, 8) narrows in the circumferential direction, in particular in a drop-shaped, in order to achieve the non-linear dependence of the free valve cross-section (A) on the angle of rotation (α).

7. Mixing valve (1) according to one of claims 4 to 6, **characterized in that** the through-hole in the downstream valve disc narrows in the direction of flow, in particular conically.

8. Mixing valve (1) according to any of claims 4 to 7, **characterized in that** the through-hole in the downstream valve disc (17) is angled in the circumferential direction so that the first and second coating means, respectively, exits the through-hole with a swirl in the circumferential direction.

9. Mixing valve (1) according to one of the preceding claims, **characterized by** an outlet nozzle (15) fed with the multi-component mixture from the coating agent outlet (4).

10. Mixing valve (1) according to claim 9,
**characterized in that**
a) the outlet nozzle (15) consists of plastic, in particular injection-moulded plastic, and/or
b) **in that** the outlet nozzle (15) has a flow channel (16) which imparts a twist to the multicomponent mixture flowing through, and/or
c) **in that** the outlet nozzle (15) is replaceable, in particular without tools, in particular
c1) by means of a bayonet catch; or
c2) by means of a cap nut (21).

11. Mixing valve (1) according to one of the preceding claims, **characterized in that,**
a) the mixing valve (1) has a flushing agent inlet for supplying a flushing agent, and/or
b) **in that** at least one of the valve discs (6, 8) has a further through-hole for the flushing agent in addition to the through-hole for the first or second coating agent.

12. Mixing valve (1) according to one of the preceding claims, **characterized by**
a) an electric motor (19, 20) for rotating the valve discs (6; 8) relative to one another, or
b) two electric motors (19, 20) for rotating the rotatable valve disc (6) of the first coating agent valve independently of the rotatable valve disc (8) of the second coating agent valve.

13. Mixing valve (1) according to one of the preceding claims, **characterized in that** the mixing valve (1) mixes the two coating agent components with a specific mixing ratio, the mixing ratio being adjustable by a corresponding rotation of the valve discs (6, 8).

14. Coating robot for the application of a multi-component mixture, in particular a multi-component paint, with a mixing valve (1) according to one of the preceding claims.

## Revendications

1. Soupape de mélange (1) pour le mélange d'un premier composant de produit de revêtement avec un deuxième composant de produit de revêtement d'un produit de revêtement afin d'obtenir un mélange multi-composant, plus particulièrement pou le mélange de composants de matériaux d'étanchéité ou de colles, avec
a) une première entrée de produit de revêtement (2) pour l'introduction du premier composant de produit de revêtement,
b) une première soupape de produit de revêtement (6, 17) pour le contrôle d'un premier flux de produit de revêtement du premier composant de produit de revêtement à travers la première entrée de produit de revêtement (2),
c) une deuxième entrée de produit de revêtement (3) pour l'introduction du deuxième composant de produit de revêtement,
d) une deuxième soupape de produit de revêtement (8, 17) pour la commande d'un deuxième flux de produit de revêtement du deuxième composant de produit de revêtement à travers la deuxième entrée de produit de revêtement (3), et
e) une sortie de produit de revêtement (4) pour la distribution du mélange multi-composant dans une direction d'écoulement de sortie (18) déterminée,
f) dans laquelle la première soupape de produit de revêtement (6, 17) et/ou la deuxième soupape de produit de revêtement (8, 17) est conçue comme une soupape à tiroir rotatif avec deux disques de soupape parallèles (6, 8, 17) qui peuvent tourner l'un par rapport à l'autre autour d'un axe de rotation,
**caractérisée en ce que**
g) l'axe de rotation des disques de soupapes (6, 8) est orienté transversalement, plus particulièrement perpendiculairement, par rapport à la direction d'écoulement de sortie (18) au niveau de la sortie de produit de revêtement (4).

2. Soupape de mélange (1) selon la revendication 1,
**caractérisée en ce que**
a) les axes de rotation des disques de soupapes rotatifs (6, 8) sont coaxiaux et/ou
b) sur chacun des deux côtés d'un disque de soupape fixe central (17) est disposé un disque de soupape rotatif (6, 8) et/ou
c) les entrées de produit de revêtement (2, 3) sont disposées sur des côtés opposés des disques de soupapes (6, 8, 17) et/ou
d) les deux composants de produit de revêtement sont regroupés à l'intérieur du disque de soupape fixe (17).

3. Soupape de mélange (1) selon l'une des revendications précédentes, **caractérisée en ce que**
a) le disque de soupape disposé en aval (17) est monté de manière fixe et
b) les disques de soupapes disposés en amont (6, 8) sont rotatifs.

4. Soupape de mélange (1) selon l'une des revendications précédentes, **caractérisée en ce que**
a) le disque de soupape disposé en amont (6, 8) comprend un trou de passage pour le premier resp. le deuxième produit de revêtement et
b) le disque de soupape disposé en aval (17) comprend un trou de passage pour le premier resp. le deuxième produit de revêtement.

5. Soupape de mélange (1) selon la revendication 4,
**caractérisée en ce que**
a) le trou de passage dans le disque de soupape disposé en amont (6, 8) peut être amené plus ou moins en recouvrement avec le trou de passage dans le disque de soupape disposé en aval (17) en fonction de l'angle de rotation relatif (α) entre les deux disques de soupapes (6, 8) et forme une section de soupape libre (A) qui dépend de l'angle de rotation relatif (α) des deux disques de soupapes (6, 8) et/ou
b) la section de soupape libre (A) dépend de manière non linéaire de l'angle de rotation (α) des deux disques de soupapes (6, 8) et/ou
c) la section de soupape libre (A) dépend de manière progressive de l'angle de rotation (α) afin de combiner, malgré un angle de rotation (α) maximum limité, un dosage fin à faibles débits de produit de revêtement avec un débit de produit de revêtement maximal important.

6. Soupape de mélange (1) selon la revendication 5, **caractérisée en ce que** le trou de passage dans au moins un des disques de soupapes (6, 8) se rétrécit dans la direction de la circonférence, plus particulièrement en forme de goutte, afin d'obtenir la dépendance non linéaire de la section de soupape libre (A) en fonction de l'angle de rotation (α).

7. Soupape de mélange (1) selon l'une des revendications 4 à 6, **caractérisée en ce que** le trou de passage dans le disque de soupape disposé en aval se rétrécit dans la direction d'écoulement, plus particulièrement de manière conique.

8. Soupape de mélange (1) selon l'une des revendications 4 à 7, **caractérisée en ce que** le trou de passage dans le disque de soupape disposé en aval (17) forme un angle dans la direction de circonférence de façon à ce que le premier resp. le deuxième produit de revêtement sorte du trou de passage avec un tourbillon dans la direction de la circonférence.

9. Soupape de mélange (1) selon l'une des revendications précédentes, **caractérisée par** une buse de sortie (15) qui est alimentée par la sortie de produit de revêtement (4) avec le mélange multi-composant.

10. Soupape de mélange (1) selon la revendication 9,
**caractérisée en ce que**
a) la buse de sortie (15) est constituée de matière plastique, plus particulièrement d'un moulage par injection de matière plastique et/ou
b) la buse de sortie (15) comprend un canal d'écoulement (16) qui confère un tourbillon au mélange multi-composant qui la traverse et/ou
c) la buse de sortie (15) est interchangeable, plus particulièrement sans outil, plus particulièrement
c1) au moyen d'un verrouillage à baïonnette ou
c2) au moyen d'un écrou de raccordement (21).

11. Soupape de mélange (1) selon l'une des revendications précédentes, **caractérisée en ce que**
a) la soupape de mélange (1) comprend, pour l'introduction d'un produit de rinçage, une entrée de produit de rinçage et/ou
b) au moins un des disques de soupapes (6, 8) comprend, à côté du trou de passage pour le premier resp. le deuxième produit de revêtement, un autre trou de passage pour le produit de rinçage.

12. Soupape de mélange (1) selon l'une des revendications précédentes, **caractérisée par**
a) un moteur électrique (19, 20) pour la rotation des disques de soupapes (6, 8) l'un par rapport à l'autre ou
b) deux moteurs électriques (19, 20) pour la rotation du disque de soupape rotatif (6) de la première soupape de produit de revêtement indépendamment du disque de soupape rotatif (8) de la deuxième soupape de produit de revêtement.

13. Soupape de mélange (1) selon l'une des revendications précédentes, **caractérisée en ce que** la soupape de revêtement (1) mélange les deux composants du produit de revêtement avec un rapport de mélange déterminé, dans laquelle le rapport de mélange peut être ajusté par une rotation correspondante des disques de soupapes (6, 8).

14. Robot de revêtement pour l'application d'un mélange multi-composant, plus particulièrement une peinture multi-composant, avec une soupape de mélange (1) selon l'une des revendications précédentes.
